# FASCICULE DE BREVET EUROPEEN

(11) **EP 0 853 452 B1**
(45) Date de publication et mention de la délivrance du brevet: **27.11.2002**
(21) Numéro de dépôt: 96929364.6
(22) Date de dépôt: 23.08.1996
(51) Int. Cl.: A41D 27/24

(54) **PROCEDE ET DISPOSITIF POUR ASSEMBLER DEUX PIECES D'ETOFFE OU ANALOGUE, ET ARTICLE NOTAMMENT VESTIMENTAIRE, AINSI OBTENU**
VERFAHREN UND VORRICHTUNG ZUM VERBINDEN VON STOFFSTÜCKEN ODER DGL. UND SO HERGESTELLTER ARTIKEL WIE BEKLEIDUNGSSTÜCK
METHOD AND DEVICE FOR JOINING TWO PIECES OF FABRIC OR THE LIKE, AND ARTICLE, FOR EXAMPLE CLOTHING ARTICLE, OBTAINED THEREFROM

(30) Priorité: 24.08.1995 FR 9510036
(43) Date de publication de la demande: 22.07.1998
(73) Titulaire: TED LAPIDUS, 75008 Paris (FR); Bordage, Michel, 37270 Larcay (FR); Bordage, Stéphane, 37270 Larcay (FR); Lapidus, Olivier, 92200 Neuilly-sur-Seine (FR)
(72) Inventeur: Lapidus, Olivier, 92200 Neuilly-sur-Seine (FR); Bordage, Michel, 37270 Larcay (FR); Bordage, Stéphane, 37270 Larcay (FR)
(74) Mandataire: Pontet, Bernard
(86) Numéro de dépôt international: FR9601312
(87) Numéro de publication internationale: WO97007697

(56) Documents cités:
- EP-A- 0 189 911
- EP-A- 0 345 866
- DE-A- 2 311 074
- DE-A- 4 028 981
- FR-A- 940 262
- FR-A- 1 487 201
- FR-A- 2 182 245

## Description

La présente invention concerne un procédé pour assembler par un matériau d'apport deux pièces d'étoffe ou autres matériaux minces et souples tels que le cuir, la feuille synthétique, en particulier pour fabriquer des vêtements, des garnissages souples, articles d'ameublement etc...

La présente invention concerne également un dispositif pour la mise en oeuvre de ce procédé.

La présente invention concerne encore un article, notamment vestimentaire, ainsi obtenu.

Pour réaliser les assemblages du genre qui vient d'être évoqué, on connaît les procédés de couture. Ils sont relativement longs à mettre en oeuvre, en particulier pour réaliser des coutures de bonne qualité. Le coût du fil de couture est non négligeable surtout si le fil est destiné à être apparent et doit par conséquent présenter un bel aspect. Dans un tel cas, le choix du fil peut présenter une difficulté, sur le plan esthétique, lorsque les étoffes à assembler présentent elles-mêmes un aspect particulier. En outre, les coutures ont tendance à se défaire au bout d'un certain temps. Elles nécessitent de prendre des précautions particulières si l'on veut éviter que des extrémités de fil dépassent du vêtement, ce qui est particulièrement inesthétique. Pour certaines coutures, des procédés particuliers doivent être mis en oeuvre si l'on veut éviter que la couture soit apparente sur l'extérieur du vêtement.

Le FR-A-940 262 décrit un procédé d'assemblage irréversible de pièces de tissus, par application d'une matière thermodurcissable et d'un champ à haute fréquence.

Le DE-A-2 311 074 décrit la réalisation d'ourlets collés. On forme l'ourlet, on y insère de la colle thermofusible par une buse et on presse le tout.

Le EP-A-0 345 866 enseigne de contrôler le transfert et positionnement des pièces d'étoffe, en vue de les coudre, au moyen d'une caméra vidéo dont on analyse l'image.

Le but de la présente invention est d'assembler des pièces d'étoffe ou matériaux minces et souples analogues avec un mise en oeuvre souple et efficace.

Suivant l'invention, le procédé pour assembler par un matériau d'apport deux pièces d'étoffe ou d'autres matériaux minces et souples tels que le cuir, la feuille synthétique, entrant dans la fabrication des vêtements, des articles de garnissage, d'ameublement et analogues, procédé dans lequel on forme un dépôt de matière adhésive sur l'une au moins des pièces le long d'une région d'assemblage prévue sur celle-ci puis on réalise l'assemble par pressage des régions d'assemblage des deux pièces l'une contre l'autre, est caractérisé en ce qu'on utilise comme matière adhésive un adhésif initialement thermofusible susceptible d'une transformation lui faisant perdre son caractère fusible.

On remplace ainsi la couture traditionnelle par un collage. Cette solution est techniquement surprenante. D'une part elle constitue une rupture par rapport à la technique de couture, universellement utilisée et très ancienne. D'autre part, on pourrait craindre que la matière adhésive thermofusible ne permette pas de réaliser des assemblages suffisamment robustes pour supporter les contraintes de toutes sortes subies par une couture. Ces contraintes ou agressions sont mécaniques pendant le port du vêtement, thermiques pendant le lavage et le repassage, chimiques notamment lors de l'exposition aux agents de lavage et nettoyage. D'autres agressions sont dues à l'exposition aux basses températures lorsque l'habit est porté à l'extérieur par grand froid, ou encore au mouillage pénétrant pendant le lavage en machine. Il a cependant été trouvé selon l'invention, que certaines matières thermofusibles à point de fusion relativement élevé (le cas échéant supérieur à 200°C) peuvent répondre à toutes ces conditions en assurant notamment à la région de collage une résistance mécanique qui est souvent supérieure à celle des pièces d'étoffe ou analogue qu'il s'agit d'assembler.

En outre, il est possible de réaliser ces assemblages avec des quantités de matière adhésive si faibles que l'étoffe n'est pas traversée et par conséquent un collage fait sur l'envers d'un tissu ne détériore nullement l'aspect de l'endroit.

Suivant un autre aspect de l'invention, le procédé pour assembler par un matériau d'apport deux pièces d'étoffe ou d'autres matériaux minces et souples tels que le cuir, la feuille synthétique, entrant dans la fabrication des vêtements, des articles de garnissage, d'ameublement et analogues, procédé dans lequel on forme un dépôt de ladite matière adhésive sur l'une au moins des pièces le long d'une région d'assemblage prévue sur celle-ci, tandis que l'on fait défiler la région d'assemblage par une position d'enduction située en face d'une buse émettrice de ladite matière adhésive, puis on réalise l'assemblage par pressage des régions d'assemblage des deux pièces l'une contre l'autre, est caractérisé en ce qu'on surveille le processus d'enduction au moyen d'une caméra vidéo à objectif macro, reliée à un écran de visualisation.

Suivant encore un autre aspect de l'invention, le procédé pour assembler par un matériau d'apport deux pièces d'étoffe ou d'autres matériaux minces et souples tels que le cuir, la feuille synthétique, entrant dans la fabrication des vêtements, des articles de garnissage, d'ameublement et analogues, procédé dans lequel on forme un dépôt de matière adhésive sur l'une au moins des pièces le long d'une région d'assemblage prévue sur celle-ci, puis on réalise l'assemblage par pressage des régions d'assemblage des deux pièces l'une contre l'autre, est caractérisé en ce qu'après avoir formé le dépôt de ladite matière adhésive sur l'une au moins des pièces, on stocke cette pièce un certain temps avant de procéder à l'assemblage avec l'autre pièce.

Il est ainsi possible de laisser s'écouler un temps relativement long entre l'enduction et l'assemblage. En effet, une matière thermofusible, utilisée comme matière adhésive au sens de l'invention, peut être déposée à chaud, après quoi on peut la laisser refroidir et se solidifier. Dans cet état, la matière perd son pouvoir adhésif. On peut ensuite la réchauffer pour effectuer l'assemblage. A ce stade, la matière adhésive fond à nouveau et retrouve son pouvoir adhésif. Pour cela, on peut par exemple utiliser une presse chauffante pour effectuer l'assemblage.

Suivant un autre aspect de l'invention, le procédé pour assembler par un matériau d'apport deux pièces d'étoffe ou d'autres matériaux minces et souples tels que le cuir, la feuille synthétique, entrant dans la fabrication des vêtements, des articles de garnissage, d'ameublement et analogues, procédé dans lequel on forme un dépôt de matière adhésive sur l'une au moins des pièces le long d'une région d'assemblage prévue sur celle-ci, puis on réalise l'assemblage par pressage des régions d'assemblage des deux pièces l'une contre l'autre, est caractérisé en ce qu'avant de réaliser l'assemblage on forme un deuxième dépôt de ladite matière adhésive sur une région d'assemblage de l'autre pièce à assembler.

Suivant l'invention, il est encore proposé un dispositif pour la mise en ouvre du procédé, comprenant des moyens d'entraînement pour faire avancer une région d'assemblage d'une pièce d'étoffe ou autres matériaux minces et souples tels que le cuir, la feuille synthétique, ..., caractérisé en ce que les moyens d'entraînement guident la pièce selon un trajet passant par une position d'enduction située face à une buse raccordée à des moyens d'alimentation en matière adhésive initialement thermofusible, mais susceptible d'une transformation lui faisant perdre son caractère fusible.

Un tel dispositif peut prendre 1 apparence d'une machine à coudre traditionnelle dont la partie portant l'aiguille serait remplacée par la buse émettrice de matière adhésive.

Il est cependant également envisagé, selon l'invention, de modifier cette architecture universellement adoptée pour les machines à coudre de façon que la direction de défilement de l'étoffe soit parallèle et non plus perpendiculaire à la potence supportant l'aiguille de couture ou respectivement la buse émettrice de colle. Le sens de défilement préféré est celui venant de la colonne supportant la potence vers la tête de travail. De préférence il est prévu entre la table de travail et la colonne un logement pour recevoir l'étoffe à son extrémité de parcours adjacente à la colonne.

Il est encore proposé suivant l'invention un article, notamment vestimentaire, comportant des pièces d'étoffe ou autres matériaux minces et souples, assemblées selon des régions d'assemblage grâce à un matériau d'apport, caractérisé en ce que le matériau d'apport est une matière adhésive intialement thermofusible, mais ayant subi une transformation qui lui a fait perdre son caractère fusible.

La matière adhésive peut être disposée sous la forme d'un cordon, de façon à réaliser une jonction selon une ligne, ou de manière répartie en surface, de façon à réaliser une jonction ayant une certaine largeur le long de chaque région d'assemblage.

D'autres particularités et avantages de l'invention ressortiront encore de la description ci-après, relative à des exemples non limitatifs.

Aux dessins annexés :
- la figure 1 est une vue schématique en élévation et en coupe d'un dispositif d'assemblage selon l'invention ;
- la figure 2 est une vue en perspective partielle illustrant le procédé d'assemblage selon l'invention ;
- la figure 3 est une vue en coupe et perspective, avec arrachement, d'un assemblage entre deux pièces d'étoffe tel qu'obtenu avec les moyens représentés aux figures 1 et 2 ;
- la figure 4 est un schéma en perspective relatif à une variante d'enduction, par pulvérisation ; et
- la figure 5 est une vue analogue à la figure 3 mais montrant l'assemblage obtenu avec l'enduction visualisée à la figure 4.

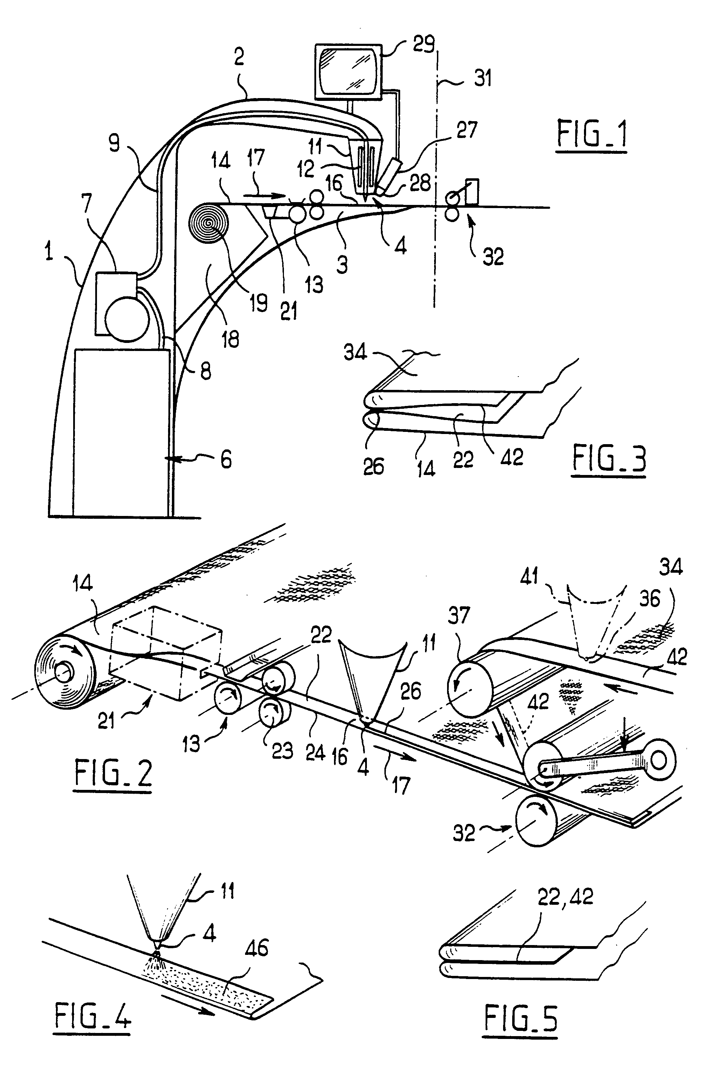

Dans l'exemple représenté à la figure 1, le dispositif comprend une colonne 1 supportant à son extrémité supérieure une potence 2 s'étendant au-dessus d'une table de travail 3.

Conformément à l'invention, le dispositif comporte une buse d'enduction de matière adhésive 4. La buse 4 est montée dans une tète d'enduction 11 suspendue à l'extrémité libre de la potence 2. Il y a dans la colonne 1 un réservoir de matière adhésive 6 ainsi qu'une pompe 7 dont l'admission 8 est raccordée au réservoir 6 et le refoulement 9 est raccordé à la buse 4. La pompe 7 sert à la circulation et la mise en pression de la matière adhésive depuis le réservoir 6 jusqu'à l'orifice de la buse 4. La tête d'enduction 11 est équipée de moyens 12 qui réchauffent la matière adhésive pour la fluidiser juste avant son éjection à travers la buse 4.

La table 3 est équipée de moyens 13 pour entraîner une pièce d'étoffe 14 de façon que celle-ci défile en passant par une position d'enduction 16 située sous la buse 4, face à l'orifice d'éjection de la buse 4.

Selon une disposition considérée comme originale en tant que telle, la direction d'avancement 17 de l'étoffe 14 est parallèle à la direction générale de la potence 2 et va d'un logement 18, ménagé entre la table 3 et la colonne 1, vers la tête 11. Dans l'exemple représenté, la pièce 14 est représentée comme étant soutenue par enroulement sur un rouleau 19 dans le logement 18. Toutefois, un tel rouleau n'est pas indispensable. En particulier, pour une pièce 14 de plus petite dimension, il est possible de disposer librement dans le logement 18 la partie de la pièce 14 qui n'est pas encore en prise avec les moyens d'entraînement 13.

Entre le logement 18 et les moyens d'entraînement 13 sont prévus des moyens de guidage 21 pouvant avoir la structure connue dans les machines à coudre sous le nom de "pied-de-biche". La fonction de ces moyens de guidage est mieux visible à la figure 2 : elle consiste à préformer la pièce 14 de façon qu'elle présente un bord 22 replié destiné à former région d'assemblage. En aval des moyens d'entraînement 13, le bord de la pièce 14 avec sa région d'assemblage repliée 22 passe dans un dispositif de mise en forme 23 qui est un moyen de pressage, éventuellement chauffant, pour former définitivement le pli latéral 24 séparant la région d'assemblage 22 du reste de la pièce 14.

Ensuite, la région 22 passe sous la buse 4 et reçoit de la buse 4 un cordon de matière adhésive 26.

Revenant à la figure 1, une caméra vidéo 27 équipée d'un objectif macro 28 orienté vers la position d'enduction 16, est fixée à la tête d'enduction 11. La caméra vidéo 27 est raccordée à un écran de visualisation 29 qui permet à un opérateur de surveiller la bonne exécution du cordon 26 sur la région d'assemblage 22.

De manière non représentée, des moyens électroniques et/ou informatiques peuvent être prévus pour réguler le débit, la pression et la température de la matière adhésive à travers la buse 4. Des moyens de commande peuvent être mis à la disposition de l'opérateur pour modifier les consignes de pression, température et débit.

Les parties situées à gauche et respectivement à droite du trait mixte 31 à la figure 1 peuvent être soit raccordées l'une à l'autre comme représenté à cette figure, soit séparées et situées en des lieux distincts. Si les parties sont raccordées comme représenté, la pièce 14, après son enduction par la tête 11, passe directement dans une presse chauffante 32 pour y être assemblée avec une autre pièce d'un matériau mince et souple identique ou différent de celui de la pièce 14. Cette autre pièce, non représentée à la figure 1, est visible à la figure 2 sous la référence 34. Elle comporte elle aussi un bord replié 42 formant région d'assemblage. Ce bord 42 peut passer par une position d'enduction 36 sous une tête d'enduction 41 pour recevoir lui aussi un cordon de matière adhésive non représenté. En variante, le bord 42 peut arriver non enduit à la presse 32. Un rouleau de retournement 37 positionne la pièce 34 de façon que sa région d'assemblage 42 soit dirigée vers le bas lorsqu'elle entre dans la presse chauffante 32 en même temps que la pièce 14. Ainsi, les deux régions d'assemblage 22, 42 se trouvent l'une contre l'autre dans la presse et forment entre elles, comme représenté schématiquement à la figure 3, un assemblage à la manière d'une "couture à l'anglaise", c'est à dire avec les deux régions d'assemblage 22 et 42 formant deux lèvres adjacentes d'un même côté des deux pièces 14 et 34 assemblées par le cordon de matière adhésive 26.

Si comme suggéré à la figure 1 par le trait mixte 31 la presse chauffante 32 est séparée du dispositif d'enduction, la pièce 14 ayant subi l'enduction peut être stockée. Une fois refroidie et solidifiée, la matière adhésive perd son pouvoir adhésif. On peut donc stocker d'une part la pièce 14 enduite, d'autre part la pièce 34 enduite ou non, puis faire passer plus tard les deux pièces 14 et 34 dans la presse chauffante 32. Le chauffage assuré par la presse 32 fait fondre la matière adhésive 26 qui assure alors le collage entre les deux régions d'assemblage 22 et 42. Après nouveau refroidissement, l'assemblage devient définitif puisqu'en service le vêtement ou autre article ainsi réalisé ne sera jamais plus soumis à une température suffisante pour que la matière adhésive fonde à nouveau. Cependant, il est possible qu'après confection totale ou partielle du vêtement ou autre article, une retouche soit nécessaire. Dans ce cas, on peut chauffer à nouveau la région d'assemblage pour défaire l'assemblage existant, puis réassembler selon la modification souhaitée.

Pour assembler les deux pièces d'étoffe, il est possible d'amener comme pièce 34 de la figure 2 une pièce qui avait préalablement été enduite à l'aide de la tête 11 puis stockée juste après l'enduction par la tête 11, sans passage par la presse chauffante 32. La pièce 34 constitue alors la première pièce enduite, et la pièce 14 la seconde pièce enduite. Dans un tel cas, la deuxième tête d'enduction 41 est inutile.

Dans la variante de réalisation représentée à la figure 4, la buse 4 est d'un type destiné non plus à la confection d'un cordon de matière adhésive, mais à la formation d'une enduction 46 répartie sur une certaine largeur, de façon à réaliser l'assemblage visualisé à la figure 5 où les deux régions d'assemblage 22, 42 sont collées l'une à l'autre sensiblement par toute leur surface.

Dans tous les exemples qui viennent d'être décrits, on peut utiliser comme matière adhésive une matière thermofusible ayant une température de fusion aussi élevée que possible en fonction de la nature des pièces à assembler. Par exemple, une matière telle que "TIVOMELT 9635/16" proposée par la société TIVOLI-FRANCE, à 26100 ROMANS (France) convient. Il s'agit d'un prépolymère à l'isocyanate, qui produit un collage qui devient définitif, c'est à dire perd son caractère fusible, au contact de l'humidité.

Bien entendu, l'invention n'est pas limitée aux exemples décrits et représentés.

Le défilement des pièces sous la tête d'enduction pourrait se faire dans le sens usuel pour les machines du genre des machines à coudre, c'est à dire dans la direction qui aurait été perpendiculaire au plan de la figure 1.

L'invention a été illustrée dans le cas d'un assemblage de deux bords de relativement grande longueur, mais d'autres types d'assemblage sont possibles, par exemple pour fixer un revers sur la face envers d'une pièce d'étoffé. Plus généralement, l'assemblage peut dans certains cas être effectué à distance des bords de l'une au moins des pièces.

## Revendications

1. Procédé pour assembler par un matériau d'apport (26, 46) deux pièces (14, 34) d'étoffe ou d'autres matériaux minces et souples tels que le cuir, la feuille synthétique, entrant dans la fabrication des vêtements, des articles de garnissage, d'ameublement et analogues, procédé dans lequel on forme un dépôt de matière adhésive (26, 46) sur l'une au moins des pièces (14, 34) le long d'une région d'assemblage (22, 42) prévue sur celle-ci, puis on réalise l'assemblage par pressage des régions d'assemblage (22, 42) des deux pièces (14, 34) l'une contre l'autre, **caractérisé en ce qu'**on utilise comme matière adhésive (26, 46) un adhésif initialement thermofusible susceptible d'une transformation lui faisant perdre son caractère fusible.

2. Procédé selon la revendication 1, **caractérisé en ce que** ladite transformation est un contact avec l'humidité.

3. Procédé selon la revendication 1 ou 2, **caractérisé en ce que** la matière adhésive utilisée est un prépolymère à l'isocyanate.

4. Procédé selon l'une des revendications 1 à 3, **caractérisé en ce que** pour former le dépôt de matière adhésive, on fait défiler la région d'assemblage par une position d'enduction (16) située en face d'une buse (4) émettrice de ladite matière adhésive (26, 46).

5. Procédé selon la revendication 4, **caractérisé en ce qu'**on surveille le processus d'enduction au moyen d'une caméra vidéo (27) à objectif macro (28), reliée à un écran de visualisation.

6. Procédé selon l'une des revendications 1 à 5, **caractérisé en ce qu'**après avoir formé le dépôt de matière adhésive (26) sur l'une au moins des pièces (34), on stocke cette pièce un certain temps avant de procéder à l'assemblage avec l'autre pièce (14).

7. Procédé selon l'une des revendications 1 à 6, **caractérisé en ce qu'**avant de réaliser l'assemblage (32) on forme un deuxième dépôt de matière adhésive sur une région d'assemblage de l'autre pièce (34) à assembler.

8. Procédé selon la revendication 7, **caractérisé en ce qu'**en avant l'assemblage (32) on fait passer la région d'assemblage de l'autre pièce (34) à assembler par une deuxième position d'enduction (36), face à une deuxième buse.

9. Procédé selon la revendication 7 ou 8, **caractérisé en ce qu'**on forme les dépôts de matière adhésive d'une manière décalée dans le temps sur la première (34) puis sur la deuxième pièce (14), après quoi on procède à l'assemblage un certain temps après la formation de dépôt de matière adhésive sur la première pièce (34).

10. Procédé selon l'une des revendications 1 à 9, **caractérisé en ce qu'**on alimente la matière adhésive (26, 6) en soumettant celle-ci à une pression à travers au moins une buse (4).

11. Procédé selon l'une des revendications 1 à 10, **caractérisé en ce qu'**on amont de la position d'enduction (16) on guide la région d'assemblage (22) pour orienter vers une buse (4) une face voulue de la région d'assemblage (22).

12. Procédé selon l'une quelconque des revendications 1 à 11, **caractérisé en ce qu'**en aval de la position d'enduction (16), on fait défiler la région d'assemblage (27) dans une presse d'assemblage (32) en même temps que la région d'assemblage (42) de l'autre pièce (34) à assembler.

13. Procédé selon l'une des revendications 1 à 12, **caractérisé en ce qu'**on effectue l'assemblage sous pression à chaud.

14. Procédé selon l'une des revendications 1 à 13, **caractérisé en ce qu'**on forme pour l'une au moins des régions d'assemblage un bord replié sur lequel on effectue le dépôt de matière adhésive.

15. Dispositif pour la mise en oeuvre d'un procédé selon l'une des revendications 1 à 14, comprenant des moyens d'entraînement (13) pour faire avancer une région d'assemblage (22) d'une pièce (14) d'étoffe ou d'un autre matériau mince et souple tel que le cuir, la feuille synthétique, **caractérisé en ce que** les moyens d'entraînement (13) guident la pièce selon un trajet passant par une position d'enduction (16) située face à une buse (4) raccordée à des moyens d'alimentation (6 à 9) en matière adhésive (26, 46) initialement thermofusible, mais susceptible d'une transformation lui faisant perdre son caractère fusible.

16. Dispositif selon la revendication 15, **caractérisé en ce que** les moyens d'alimentation comprennent une pompe (7) de circulation et de mise en pression de la matière adhésive.

17. Dispositif selon la revendication 15 ou 16, **caractérisé en ce qu'**il comprend une caméra vidéo (27) équipée d'un objectif macro (28), orientable vers la position d'enduction (16), et reliée à un écran de visualisation (29).

18. Dispositif selon l'une des revendications 15 à 17, **caractérisé en ce qu'**il comprend en amont de la position d'enduction (16) un moyen (21) d'orientation de la région d'assemblage (22).

19. Dispositif selon l'une des revendications 15 à 18, **caractérisé en ce que** la buse (4) est associée à des moyens de chauffage (12).

20. Dispositif selon l'une des revendications 15 à 19, **caractérisé en ce qu'**il comprend une colonne (1) supportant une potence (2) à laquelle est fixée la buse (4) et une table (3) sous la potence, et **en ce que** les moyens d'entraînement (13) sont conçus pour faire avancer la pièce (14) de la colonne (1) vers la position d'enduction (16).

21. Dispositif selon la revendication 20, **caractérisé en ce que** des moyens (18, 19) sont prévus pour recevoir la pièce entre la table (3) et la colonne (1).

22. Dispositif selon l'une des revendications 15 à 21, **caractérisé en ce qu'**il comprend en aval de la position d'enduction (16) des moyens de pressage (32), et **en ce qu'**il comprend en outre des moyens (37) pour guider vers les moyens de pressage (37) une région d'assemblage (42) d'une deuxième pièce (34) d'étoffe ou autre matériau mince et souple.

23. Dispositif selon la revendication 22, **caractérisé en ce qu'**il comprend des moyens pour faire passer la région d'assemblage (42) de la deuxième pièce (34) par une deuxième région d'enduction (36) en face d'une deuxième buse en amont des moyens de pressage (32).

24. Dispositif selon l'une des revendications 15 à 22, **caractérisé en ce qu'**il comprend des moyens pour chauffer les pièces à assembler dans la région d'assemblage.

25. Article, notamment vestimentaire, comportant des pièces d'étoffe (14, 34) ou autres matériaux minces et souples, assemblées selon des régions d'assemblage (22, 42) grâce à un matériau d'apport, **caractérisé en ce que** le matériau d'apport est une matière adhésive (26) initialement thermofusible, mais ayant subi une transformation qui lui a fait perdre son caractère fusible.

26. Article selon la revendication 25, **caractérisé en ce que** la matière adhésive est disposée sous la forme d'un cordon (26), de façon à réaliser une jonction selon une ligne.

27. Article selon la revendication 25 ou 26, **caractérisé en ce que** la matière adhésive est disposée de manière répartie en surface, de façon à réaliser une jonction ayant une certaine largeur.

28. Article selon l'une des revendications 25 à 27, **caractérisé en ce que** ladite transformation fait intervenir l'action de l'humidité.

29. Article selon l'une des revendications 25 à 28, **caractérisé en ce que** la matière adhésive est initialement un prépolymère à l'isocyanate.

## Patentansprüche

1. Verfahren zum Verbinden von zwei Stücken (14,34) aus Stoff oder anderen dünnen und biegsamen Werkstoffen, wie Leder oder Kunststoffolie, für die Herstellung von Kleidern, Fütterungsartikeln, Möbel oder dergleichen durch ein Zusatzmaterial (26,46), bei welchem man einen Auftrag von Klebstoff (26,46) auf mindestens einem der Stücke (14,34) längs eines auf diesem vorgesehenen Verbindungsbereichs (22,42) bildet und dann die Verbindung durch Aufeinanderpressen der Verbindungsbereiche (22,42) der beiden Stücke (14,34) vornimmt, **dadurch gekennzeichnet, daß** man als Klebstoff (26,46) einen anfangs warmschmelzenden Kleber verwendet, der eine Umwandlung zuläßt, durch die er seinen schmelzenden Charakter verliert.

2. Verfahren nach Anspruch 1, **dadurch gekennzeichnet, daß** die Umwandlung ein Kontakt mit Feuchtigkeit ist.

3. Verfahren nach Anspruch 1 oder 2, **dadurch gekennzeichnet, daß** der verwendete Klebstoff ein Isocyanatpräpolymer ist.

4. Verfahren nach einem der Ansprüche 1 bis 3, **dadurch gekennzeichnet, daß** man für die Bildung des Klebstoffauftrags den Verbindungsbereich durch eine Auftragsstelle (16) laufen läßt, die gegenüber einer diesen Klebstoff (26,46) abgebenden Düse (4) angeordnet ist.

5. Verfahren nach Anspruch 4, **dadurch gekennzeichnet, daß** man den Auftragsvorgang mit Hilfe einer Videokamera (27) mit Makroobjektiv (28) überwacht, die mit einem Bildschirm verbunden ist.

6. Verfahren nach einem der Ansprüche 1 bis 5, **dadurch gekennzeichnet, daß** man nach Bildung des Klebstoffauftrags (26) auf mindestens einem der Stücke (34) dieses Stück eine gewisse Zeit lagert, bevor die Verbindung mit dem anderen Stück (14) vorgenommen wird.

7. Verfahren nach einem der Ansprüche 1 bis 6, **dadurch gekennzeichnet, daß** man vor der Durchführung der Verbindung (32) einen zweiten Klebstoffauftrag auf einem Verbindungsbereich des anderen zu verbindenden Stücks (34) bildet.

8. Verfahren nach Anspruch 7, **dadurch gekennzeichnet, daß** man vor der Verbindung (32) den Verbindungsbereich des anderen zu verbindenden Stücks (34) durch eine zweite Auftragsstelle (36) gegenüber einer zweiten Düse laufen läßt.

9. Verfahren nach Anspruch 7 oder 8, **dadurch gekennzeichnet, daß** man die Klebstoffaufträge zeitlich versetzt auf dem ersten (34) und dann auf dem zweiten Stück (14) bildet, worauf man die Verbindung eine gewisse Zeit nach der Bildung des Klebstoffauftrags auf dem ersten Stück (34) vornimmt.

10. Verfahren nach einem der Ansprüche 1 bis 9, **dadurch gekennzeichnet, daß** man den Klebstoff (26,6) zuführt, indem man ihn über mindestens eine Düse (4) einem Druck aussetzt.

11. Verfahren nach einem der Ansprüche 1 bis 10, **dadurch gekennzeichnet, daß** man stromauf der Auftragsstelle (16) den Verbindungsbereich (22) so führt, daß eine gewünschte Seite des Verbindungsbereichs (22) einer Düse (4) zugewandt wird.

12. Verfahren nach einem der Ansprüche 1 bis 11, **dadurch gekennzeichnet, daß** man stromab der Auftragsstelle (16) den Verbindungsbereich (16) gleichzeitig mit dem Verbindungsbereich (42) des anderen zu verbindenden Stücks (34) durch eine Verbindungspresse (32) laufen läßt.

13. Verfahren nach einem der Ansprüche 1 bis 12, **dadurch gekennzeichnet, daß** man die Verbindung unter Druck in der Wärme durchführt.

14. Verfahren nach einem der Ansprüche 1 bis 13, **dadurch gekennzeichnet, daß** man bei mindestens einem der Verbindungsbereiche einen umgefalteten Rand bildet, auf welchem der Klebstoffauftrag vorgenommen wird.

15. Vorrichtung zur Durchführung eines Verfahrens nach einem der Ansprüche 1 bis 14, umfassend Antriebsmittel (13) zur Vorbewegung eines Verbindungsbereichs (22) eines Stücks (14) aus Stoff oder einem anderen dünnen und biegsamen Werkstoff, wie Leder oder Kunststoffolie, **dadurch gekennzeichnet, daß** die Antriebsmittel (13) das Stück in einer Bewegungsbahn führen, die eine Auftragsstelle (16) passiert, die gegenüber einer Düse (4) angeordnet ist, die mit Mitteln (6 bis 9) zur Zufuhr von Klebstoff (26,46) verbunden ist, der anfangs warmschmelzend ist, jedoch eine Umwandlung gestattet, durch die er seinen schmelzenden Charakter verliert.

16. Vorrichtung nach Anspruch 15, **dadurch gekennzeichnet, daß** die Zufuhrmittel eine Pumpe (7) zum Befördern und Unterdrucksetzen des Klebstoffs umfassen.

17. Vorrichtung nach Anspruch 15 oder 16, **dadurch gekennzeichnet, daß** sie eine mit einem Makroobjekt (28) ausgerüstete Videokamera (27) aufweist, die auf die Auftragsstelle (16) richtbar ist und mit einem Bildschirm (29) verbunden ist.

18. Vorrichtung nach einem der Ansprüche 15 bis 17, **dadurch gekennzeichnet, daß** sie stromauf der Auftragsstelle (16) ein Mittel (21) zur Ausrichtung des Verbindungsbereichs (22) aufweist.

19. Vorrichtung nach einem der Ansprüche 15 bis 18, **dadurch gekennzeichnet, daß** der Düse (4) Heizmittel (12) zugeordnet sind.

20. Vorrichtung nach einem der Ansprüche 15 bis 19, **dadurch gekennzeichnet, daß** sie eine Säule (1), die einen Ausleger (2) trägt, an dem die Düse (4) befestigt ist, und unter dem Ausleger einen Tisch (3) aufweist und daß die Antriebsmittel (13) dafür ausgelegt sind, das Stück (14) von der Säule (1) zu der Auftragsstelle (16) vorzubewegen.

21. Vorrichtung nach Anspruch 20, **dadurch gekennzeichnet, daß** Mittel (18,19) zur Aufnahme des Stücks zwischen dem Tisch (3) und der Säule (1) vorgesehen sind.

22. Vorrichtung nach einem der Ansprüche 15 bis 21, **dadurch gekennzeichnet, daß** sie stromab der Auftragsstelle (16) Pressmittel (32) aufweist und daß sie außerdem Mittel (37) zum Führen eines Verbindungsbereichs (42) eines zweiten Stücks (34) aus Stoff oder aus einem anderen dünnen und biegsamen Werkstoff auf die Pressmittel (37) zu aufweist.

23. Vorrichtung nach Anspruch 22, **dadurch gekennzeichnet, daß** sie Mittel aufweist, um den Verbindungsbereich (42) des zweiten Stücks (34) durch einen zweiten Auftragsbereich (36) gegenüber einer zweiten Düse stromauf der Pressmittel (32) laufen zu lassen.

24. Vorrichtung nach einem der Ansprüche 15 bis 22, **dadurch gekennzeichnet, daß** sie Mittel zum Erhitzen der zu verbindenden Stücke im Verbindungsbereich aufweist.

25. Artikel, insbesondere Kleidungsstück, bestehend aus Stücken (14,34) aus Stoff oder anderen dünnen und biegsamen Werkstoffen, die in Verbindungsbereichen (22,42) mit Hilfe eines Zusatzmaterials verbunden sind, **dadurch gekennzeichnet, daß** das Zusatzmaterial ein Klebstoff (26) ist, der anfangs warmschmelzend ist, jedoch einer Umwandlung unterzogen wurde, durch die er seinen schmelzenden Charakter verloren hat.

26. Artikel nach Anspruch 25, **dadurch gekennzeichnet, daß** der Klebstoff in Form einer Raupe (26) angeordnet ist, so daß eine Verbindung entlang einer Linie geschaffen wird.

27. Artikel nach Anspruch 25 oder 26, **dadurch gekennzeichnet, daß** der Klebstoff flächig verteilt angeordnet ist, so daß eine Verbindung mit einer gewissen Breite geschaffen wird.

28. Artikel nach einem der Ansprüche 25 bis 27, **dadurch gekennzeichnet, daß** bei der Umwandlung die Einwirkung von Feuchtigkeit eingesetzt wird.

29. Artikel nach einem der Ansprüche 25 bis 28, **dadurch gekennzeichnet, daß** der Klebstoff anfangs ein Isocyanatpräpolymer ist.

## Claims

1. A method of joining by means of an added material (26, 46) two pieces (14, 34) of fabric or other thin and flexible materials such as leather or synthetic sheet, used in the manufacture of garments, lining articles, furnishing articles and the like, wherein there is formed a deposit of adhesive material (26, 46) on at least one of the pieces (14, 34) along a joining region (22, 42) provided on the latter, then the join is produced by pressing the jining regions (22, 42) of the two pieces (14, 34) against one another, **characterised in that** there is used as an adhesive material (26, 46) an adhesive which is initially a hot-melt and is susceptible of a transformation causing the adhesive material to loose its meltable nature.

2. A method according to claim 1, **characterised in that** said transformation is a contact with humidity.

3. A method according to claim 1 or 2, **characterised in that** the adhesive material used is an isocyanate prepolymer.

4. A method according to one of claims 1-3, **characterised in that** in order to form the deposit of adhesive material, the joining region is caused to progress through a coating position (16) located opposite a nozzle (4) emitting said adhesive material (26, 46).

5. A method according to claim 4, **characterised in that** the coating process is monitored by means of a video camera (27) with a macro lens (28), connected to a display screen (29).

6. A method according to one of claims 1-5, **characterised in that** after having formed the deposit of adhesive material (26) on at last one of the pieces (34), this piece is stored for a certain time before proceeding with the joining with the other piece (14).

7. A method according to one of claims 1-6, **characterised in that** before making the join (32) there is formed a second deposit of adhesive material on a joining region of the other piece (34) to be joined.

8. A method according to claim 7, **characterised in that** before the joining (32) the joining region of the other piece (34) to be joined is caused to pass through a second coating position (36) opposite a second nozzle.

9. A method according to claim 7 or 8, **characterised in that** the deposits of adhesive material are formed with a time lag on the first (34) and then on the second (14) piece, whereafter the joining is carried out a certain time after the formation of the deposit of adhesive material on the first piece (34).

10. A method according to one of claims 1-9, **characterised in that** the adhesive material (26, 46) is fed by subjecting the latter to a pressure through at least one nozzle (4).

11. A method according to one of claims 1-10, **characterised in that** upstream of the coating position (16) the joining region (22) is guided in such a way as to orientate a desired face of the joining region (22) towards a nozzle (4).

12. A method according to one of claims 1-11, **characterised in that** downstream of the coating position (16), the joining region (27) is caused to progress in a joining press (32) at the same time as the joining region (42) of the other piece (34) to be joined.

13. A method according to one of claims 1-12, **characterised in that** the join is made under pressure and application of heat.

14. A method according to one of claims 1-13, **characterised by** forming a folded back edge for at least one of the joining regions, and carrying out the deposit of adhesive material onto said folded back edge.

15. A device for implementation of a method according to one of claims 1-14, comprising drive means (13) for causing progress of a joining region (22) of a piece (14) of fabric or of another thin and flexible material such as leather or synthetic sheet, **characterised in that** the drive means (13) guide the piece along a path passing through a coating position (16) located opposite a nozzle (4) connected to means (6, 9) for feeding an adhesive material (26, 46) which is initially a hot-melt but is susceptible of a transformation causing said adhesive to loose its meltable nature.

16. A device according to claim 15, **characterised in that** the feed means comprise a pump (7) for circulating and pressuring the adhesive material.

17. A device according to claim 15 or 16, **characterised by** comprising a video camera (27) fitted with a macro lens (28), orientable towards the coating position (16), and connected to a display screen (29).

18. A device according to one of claims 15-17, **characterised by** comprising, upstream of the coating position (16), a means (21) of orientation of the joining region (22).

19. A device according to one of claims 15-18, **characterised in that** the nozzle (4) is associated with heating means (12).

20. A device according to one of claims 15-19, **characterised in that** it comprises a column (1) supporting an arm (2) to which is fixed the nozzle (4), and a table (3) under the arm, and **in that** the drive means (13) are designed to cause the piece (14) to progress from the column (1) towards the coating position (16).

21. A device according to claim 20, **characterised by** means (18, 19) for receiving the piece between the table (3) and the colmun (1).

22. A device according to one of claims 15-21, **characterised by** comprising pressing means (32) downstream of the coating position (16), and by furthermore comprising means (37) for guiding towards the pressing means (37) a joining region (42) of a second piece (34) of fabric or other thin and flexible material.

23. A device according to claim 22, **characterised by** means for causing the joining region (42) of the second piece (34) to pass through a second coating region (36) opposite a second nozzle upsream of the pressing means (32).

24. A device according to one of claims 15-22, **characterised by** means for heating the pieces to be joined in the joining region.

25. An article, clothing article in particular, comprising pieces of fabric (14, 34) or of other thin and flexible materials, joined along joining regions (22, 42) by means of an added maerial, **characterised in that** the added material is an adhesive material (26) which is initially a hot-melt but having undergone a transformation by which said adhesive lost its meltable nature.

26. An article according to claim 25, **characterised in that** the adhesive material is disposed in the form of a bead (26) in order to form a junction along a line.

27. An article according to claim 25 or 26, **characterised in that** the adhesive material is disposed such that it is surface distributed in order to form a junction having a certain width.

28. An article according to one of claims 25-27, **characterised in that** said transformation involves the action of humidity.

29. An article according to one of claims 25-28, **characterised in that** the adhesive material is initially an isocyanate prepolymer.
